# EUROPÄISCHE PATENTSCHRIFT

(11) **EP 0 825 210 B1**
(45) Veröffentlichungstag und Bekanntmachung des Hinweises auf die Patenterteilung: **27.08.2003**
(21) Anmeldenummer: 97114061.1
(22) Anmeldetag: 14.08.1997
(51) Int. Cl.: C08G 18/67, C08G 18/48, C08G 18/40, C08G 18/63

(54) **Bindemittelgemisch, Verfahren zu seiner Herstellung und seine Verwendung**
Binder mixture, process for its preparation and its use
Mélange de liants, procédé pour sa préparation et son utilisation

(30) Priorität: 23.08.1996 DE 19634076
(43) Veröffentlichungstag der Anmeldung: 25.02.1998
(73) Patentinhaber: BAYER AG, 51368 Leverkusen (DE)
(72) Erfinder: Melchiors, Martin, Dr., 52064 Aachen (DE); Schwindt, Jürgen, Dr., 51373 Leverkusen (DE); Ruttmann, Gerhard, 51399 Burscheid (DE); Hovestadt, Wieland, Dr., 47800 Krefeld (DE); Probst, Joachim, Dr., 51375 Leverkusen (DE); Pedain, Josef, Dr., 51061 Köln (DE)

(56) Entgegenhaltungen:
- WO-A-96/11965
- US-A- 3 523 093

## Beschreibung

Die Erfindung betrifft ein neues, zur Herstellung lösemittelfreier Beschichtungen geeignetes Bindemittelgemisch aus einer lösemittelfreien Polyisocyanat-Komponente und einer speziellen, lösemittelfreien, hydroxyfunktionellen Polyetherpolyacrylat-Komponente, sowie Verfahren zur Herstellung der Polyetherpolyacrylatkomponente und die Verwendung des Bindemittelgemisches in lösemittelfreien Beschichtungen zum Schützen metallischer und mineralischer Substrate gegen äußere Einflüsse.

Beschichtungen zum Schützen von Substraten gegen durch äußere Einflüsse verursachte Schäden wie Korrosion, Errosion oder mechanische Beschädigungen sind seit langem bekannt (vgl. z.B. Glasurit-Handbuch, Lacke und Farben, 11. Auflage, S. 494 ff., Curt R. Vincentz Verlag, Hannover, 1984 oder DIN 55 928, Teile 5 und 9.

Die Beschichtungssysteme des Standes der Technik werden im folgenden kurz aufgeführt und lassen sich grob in Einkomponenten-Systeme (1K), Zweikomponenten-Epoxid-Harz-Systeme (2K-EP), Zweikomponenten-Polyurethansysteme (2K-PUR) einteilen. Dabei zeigen physikalisch trocknende IK-Beschichtungsmittel, wie z.B. Vinylchlorid-Copolymerisate oder Acrylat-Copolymerisate, zwar gute Beständigkeit gegen wäßrige Salzlösungen, Säuren oder Basen, dagegen schlechte Beständigkeit gegen tierische oder pflanzliche Fette, Lösemittel oder Chemikalien; außerdem benötigen diese Copolymerisate große Mengen organischer Lösemittel zur Formulierung von Bindemittelgemischen mit praxisgerechten Viskositäten.

Im wesentlichen oxidativ trocknende 1K-Beschichtungsmittel, wie z.B. Alkydharze oder Epoxyharzester, zeichnen sich durch gute Substrathaftung und verbesserte Lösemittel- und Chemikalienbeständigkeit aus, zeigen dagegen aber Schwächen beim Angriff von Säuren oder Basen. Die Bindemittelgemische benötigen ebenfalls organische Lösemittel für eine praxisgerechte Formulierung.

Beschichtungen auf Basis von 2K-EP verbinden gute mechanische Festigkeit mit hoher Beständigkeit gegen Lösemittel, Chemikalien, Säuren und Basen; zusätzlich zeichnen sie sich durch sehr gute Substrathaftung aus. Die Bindemittelgemische lassen sich lösemittelarm oder lösemittelfrei sowie wäßrig formulieren.

Ein deutlicher Nachteil, im Hinblick auf die Schutzwirkung der Beschichtungen, ist die bekanntermaßen schlechte Elastizität von 2K-EP-Beschichtungen, insbesondere bei tiefen Temperaturen (vgl. z.B. Kunststoff-Handbuch, Bd. 7; Polyurethane, 2. Auflage, Hrsg. G. Oertel, Hanser Verlag, München, Wien 1983, S. 556-8). Diese Sprödigkeit führt zu schlechter Rißüberbrückung durch die Beschichtung, so daß hier ein Angriff auf das Substrat erfolgen kann.

Eine ausgewogene Kombination aus Härte und Elastizität ist dagegen die herausragende Eigenschaft der 2K-PUR-Beschichtungen und der größte Vorteil gegenüber 2K-EP-Beschichtungen. Bei ähnlich guter Beständigkeit gegen Chemikalien, Lösemittel, Säuren und Basen ist jedoch die Substrathaftung der 2K-PUR-Beschichtungen im allgemeinen schlechter als bei 2K-EP-Systemen.

Die hydroxyfunktionelle Bindemittelkomponente der 2K-PUR-Beschichtungen kann auf verschiedenen chemischen Strukturtypen aufgebaut sein. So zeigen 2K-PUR-Beschichtungen auf Basis von Polyacrylatpolyolen gute Licht- und Wetterbeständigkeit sowie Resistenz gegen Verseifung, Lösemittel und Chemikalien. Von Nachteil ist aber das relativ hohe Viskositätsniveau der Bindemittelgemische, was oft den Einsatz organischer Lösemittel in den Formulierungen notwendig macht. Dagegen besitzen 2K-PUR-Bindemittelgemische auf Basis von Polyesterpolyolen deutlich niedrigere Viskositäten und können somit lösemittelärmer formuliert werden. Bei guter Chemikalien-, Lösemittel-, Wetter- und Lichtbeständigkeit weisen diese Beschichtungen allerdings den Nachteil einer geringen Verseifungsbeständigkeit auf, was ihre Verwendungsgmöglichkeit im Korrosionsschutz metallischer Substrate sowie zum Beschichten mineralischer (alkalischer) Untergründe stark einschränkt.

In der EP-A-580 054 werden hydroxyfunktionelle Polyesterpolyacrylat-Bindemittel für lichtechte, lösemittelfreie Beschichtungen beschrieben. Diese Produkte verbinden die guten Beständigkeitseigenschaften der Polyacrylate mit dem niedrigeren Viskositätsniveau der Polyester; sie benötigen aber zum Erreichen einer ausreichend niedrigen Viskosität größere Mengen hydrophober Reaktivverdünner sowie cyclischer Ester zum Verlängern der Hydroxy-Seitengruppen der Polyacrylatketten mit Hydroxyester-Einheiten.

Deutlich bessere Verseifungsbeständigkeit sowie gute Lösemittel- und Chemikalienbeständigkeit zeigen 2K-PUR-Beschichtungen auf Basis von Polyetherpolyolen. Zudem lassen sich darauf basierende Bindemittelgemische aufgrund ihres sehr niedrigen Viskositätsniveaus lösemittelarm oder lösemittelfrei formulieren. Diese Beschichtungen weisen aber den Nachteil einer schlechten Substrathaftung und einer schlechten Licht- und Wetterbeständigkeit auf.

Aufgabe der vorliegenden Erfindung war daher die Bereitstellung eines lösemittel-freien, niedrigviskosen Beschichtungssystems, das die o. g. Nachteile des Standes der Technik nicht aufweist und insbesondere gute Schutzwirkung beim Beschichten metallischer Substrate oder mineralischer Untergründe gegen Korrosion, Errosion oder mechanische Beschädigung gewährleistet.

Überraschend wurde gefunden, daß diese Aufgabe durch die Bereitstellung eines Bindemittelgemisches auf Basis eines Polyisocyanats und eines Polyetherpolyacrylats gelöst werden kann.

Gegenstand der Erfindung ist also ein lösemittelfreies, niedrigviskoses Bindemittelgemisch zur Herstellung harter Beschichtungen bestehend im wesentlichen aus
A) einer Polyisocyanatkomponente bestehend aus mindestens einem organischen Polyisocyanat und
B) einer lösemittelfreien Polyhydroxykomponente, bestehend aus
   B₁) einer hydroxyfunktionellen Polyacrylatkomponente und
   B₂) einer, eine oder mehrere Hydroxygruppen-tragenden Ethergruppen-haltigen Verbindung oder einem Gemisch mehrerer solcher Verbindungen sowie gegebenenfalls
   B₃) weiteren hydroxyfunktionellen Verbindungen
in einem NCO : OH-Äquivalentverhältnis von 0,5 : 1 bis 2,0 : 1 entsprechenden Mengen, dadurch gekennzeichnet, daß die Polyacrylatkomponente B₁) aus einem Gemisch olefinisch ungesättigter Monomere, in welchem mindestens eines hydroxyfunktionell sein muß, in Gegenwart der Komponente B₂) und gegebenenfalls der Komponente B₃) hergestellt wird, und daß die Polyhydroxykomponente B) einen Hydroxylgruppengehalt von 3,0 bis 18 Gew.-% und eine Viskosität bei 23°C von 200 bis 10 000 mPa·s aufweist.

Gegenstand der Erfindung ist auch ein Verfahren zur Herstellung dieses Bindemittelgemisches und dessen Verwendung in lösemittelfreien Zweikomponenten-Polyurethansystemen zum Beschichten metallischer oder mineralischer Substrate.

Bei der erfindungsgemäßen Polyisocyanatkomponente A) handelt es sich um organische Polyisocyanate mit einer mittleren NCO-Funktionalität von mindestens 2 und einem Molekulargewicht von mindestens 140 g/mol. Gut geeignet sind vor allem (i) unmodifizierte organische Polyisocyanate des Molekulargewichtsbereichs 140 bis 300 g/mol, (ii) Lackpolyisocyanate eines Molekulargewichts im Bereich von 300 bis 1 000 g/mol sowie (iii) Urethangruppen-aufweisende NCO-Prepolymere eines über 1 000 g/mol liegenden Molekulargewichtes oder Gemische aus (i) bis (iii).

Beispiele für Polyisocyanate der Gruppe (i) sind 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1-Isocyanato-3,3,5-trimethyl-5-isocyanatomethyl-cyclohexan (IPDI), 1-Isocyanato-1-methyl-4-(3)-isocyanatomethyl-cyclohexan, Bis-(4-isocyanatocyclohexyl)methan, 1,10-Diisocyanatodecan, 1,12-Diisocyanato-dodecan, Cyclohexan-1,3- und -1,4-diisocyanat, Xylylendiisocyanat-Isomere, 2,4-Diisocyanatotoluol oder dessen Gemische mit 2,6-Diisocyanatotoluol mit vorzugsweise, bezogen auf Gemisch, bis zu 35 Gew.-% an 2,6-Diisocyanatotoluol, 2,2'-, 2,4'-, 4,4'-Diisocyanatodiphenylmethan oder technische Polyisocyanatgemische der Diphenylmethanreihe oder beliebige Gemische der genannten Isocyanate. Bevorzugt kommen dabei die Polyisocyanate der Diphenylmethanreihe, besonders bevorzugt als Isomerengemische, zum Einsatz.

Polyisocyanate der Gruppe (ii) sind die an sich bekannten Lackpolyisocyanate. Unter dem Begriff "Lackpolyisocyanate" sind im Rahmen der Erfindung Verbindungen bzw. Gemische von Verbindungen zu verstehen, die durch an sich bekannte Oligomerisierungsreaktion von einfachen Diisocyanaten der unter (i) beispielhaft genannten Art erhalten werden.

Geeignete Oligomerisierungsreaktionen sind z.B. die Carbodiimidisierung, Dimerisierung. Trimerisierung, Biuretisierung, Harnstoffbildung, Urethanisierung, Allophanatisierung und/oder Cyclisierung unter Ausbildung von Oxadiazinstrukturen. Oftmals laufen bei der "Oligomerisierung" mehrere der genannten Reaktionen gleichzeitig oder nacheinander ab. Bevorzugt handelt es sich bei den "Lackpolyisocyanaten" um a) Biuretpolyisocyanate, b) Isocyanuratgruppen-aufweisende Polyisocyanate, c) Isocyanurat- und Uretdiongruppen-aufweisende Polyisocyanatgemische, d) Urethan- und/oder Allophanatgruppen-aufweisende Polyisocyanate oder um e) Isocyanurat- und Allophanatgruppen-aufweisende Polyisocyanatgemische auf Basis einfacher Diisocyanate.

Die Herstellung von derartigen Lackpolyisocyanaten ist bekannt und beispielweise in DE-A 1 595 273, DE-A 3 700 209 und DE-A 3 900 053 oder in EP-A-0 330 966, EP-A-0 259 233, EP-A-0 377 177, EP-A-0 496 208, EP-A-0 524 501 bzw. US-A 4 385 171 beschrieben.

Polyisocyanate der Gruppe (iii) sind die an sich bekannten Isocyanatgruppen aufweisenden Prepolymere auf Basis von einfachen Diisocyanaten der oben beispielhaft genannten Art und/oder auf Basis von Lackpolyisocyanaten (ii) einerseits und organischen Polyhydroxylverbindungen eines über 300 g/mol liegenden Molekulargewichts andererseits. Während es sich bei den Urethangruppen-aufweisenden Lackpolyisocyanaten der Gruppe (ii) um Derivate von niedermolekularen Polyolen des Molekulargewichtsbereichs 62 bis 300 g/mol handelt (geeignete Polyole sind beispielsweise Ethylenglykol, Propylenglykol, Trimethylolpropan, Glycerin oder Gemische dieser Alkohole), werden zur Herstellung der NCO-Prepolymeren der Gruppe (iii) Polyhydroxylverbindungen eines über 300 g/mol, vorzugsweise über 500 g/mol, besonders bevorzugt eines zwischen 500 und 4 000 g/mol liegenden Molekulargewichts eingesetzt. Derartige Polyhydroxylverbindungen sind insbesondere solche, die pro Molekül 2 bis 6, vorzugsweise 2 bis 3 Hydroxylgruppen aufweisen und aus der Gruppe, bestehend aus Ether-, Ester-, Thioether-, Carbonatund Polyacrylatpolyolen und Gemischen aus derartigen Polyolen ausgewählt sind.

Bei der Herstellung der NCO-Prepolymeren (iii) können die genannten höhermolekularen Polyole auch in Abmischungen mit den genannten niedermolekularen Polyolen zur Anwendung gelangen, so daß unmittelbar Gemische aus niedermolekularen, Urethangruppen aufweisenden Lackpolyisocyanaten (ii) und höhermolekularen NCO-Prepolymeren (iii) resultieren, die ebenfalls als erfindungsgemäße Ausgangskomponente A) geeignet sind.

Zur Herstellung der NCO-Prepolymeren (iii) bzw. ihrer Gemische mit den Lackpolyisocyanaten (ii) werden Diisocyanate (i) der oben beispielhaft genannten Art oder Lackpolyisocyanate der unter (ii) beispielhaft genannten Art mit den höhermolekularen Hydroxylverbindungen bzw. deren Gemischen mit niedermolekularen Polyhydroxylverbindungen der beispielhaft genannten Art unter Einhaltung eines NCO/OH-Äquivalentverhältnisses von 1,1 : 1 bis 40 : 1, vorzugsweise 2 : 1 bis 25 : 1 unter Urethanbildung umgesetzt. Gewünschtenfalls kann bei Verwendung einer Überschusses an destillierbarem Ausgangsdiisocyanat dieser Überschuß im Anschluß an die Umsetzung destillativ entfernt werden, so daß monomerenfreie NCO-Prepolymere vorliegen. Falls als Isocyanatkomponente Diisocyanate der beispielhaft genannten Art im Überschuß eingesetzt worden sind und auf die destillative Entfernung des nicht umgesetzten Überschusses verzichtet wird, liegen NCO-Prepolymere, d.h. Gemische aus Ausgangsdiisocyanaten (i) und echten NCO-Prepolymeren (iii) vor, die ebenfalls als erfindungsgemäße Ausgangskomponente A) eingesetzt werden können.

Die Polyhydroxykomponente B) weist einen Hydroxylgruppengehalt von 3,0 bis 18,0 Gew.-%, vorzugsweise 5,0 bis 15 Gew.-% und eine Viskosität bei 23°C von 200 bis 10 000 mPa·s, vorzugsweise 300 bis 5 000 mPa-s auf.

Sie wird hergestellt durch radikalische Polymerisation von
B₁) 20 bis 80 Gew.-Teilen eines Gemisches olefinisch ungesättigter Monomere, welches zu 5 bis 50 Gew.-%, bezogen auf B₁), aus alkoholischen Hydroxylgruppen aufweisenden Monomeren besteht, in Gegenwart von
B₂) 20 bis 80 Gew.-Teilen eines, eine oder mehrere Hydroxylgruppen aufweisenden Polyethers, der ein mittleres Molekulargewicht von 106 bis 4 000 g/mol und einen Hydroxylgruppengehalt von 1,0 bis 30,0 Gew.-% aufweist oder eines Gemisches mehrerer solcher Polyether, gegebenenfalls unter Zusatz von
B₃) 0 bis 25 Gew.-Teilen weiteren hydroxyfunktionellen Verbindungen, die ein Molekulargewicht von nicht mehr als 1 000 g/mol besitzen, mit Hilfe von Radikalbildnern als Polymerisationsinitiatoren sowie gegebenenfalls weiteren Zusatzstoffen, wie z.B. Molekulargewichtsreglern.

Bei den Monomeren B₁) handelt es sich um einfach ungesättigte Verbindungen des Molekulargewichtsbereichs 53 bis 400 g/mol, vorzugsweise 80 bis 220 g/mol. Hierzu gehören beispielsweise Acrylsäure- oder Methacrylsäurealkylester oder -cycloalkylester mit 1 bis 18, vorzugsweise 1 bis 8 Kohlenstoffatomen mit Alkyl- bzw. Cycloalkylrest wie beispielsweise Methyl-, Ethyl-, n-Propyl-, n-Butyl-, Isopropyl-, Isobutyl-, t-Butyl-, die isomeren Pentyl-, Hexyl-, Octyl-, Dodecyl-, Hexadecyl- oder Octadecylester der genannten Säuren, Acetoacetoxyethylmethacrylat, Acrylnitril, Vinylether, Methacrylnitril, Vinylacetat, Styrol oder Vinyltoluol. Außerdem geeignet sind carboxylgruppenhaltige, ungesättigte Monomere, wie beispielsweise Acrylsäure, Methacrylsäure, Itaconsäure, Crotonsäure und Halbester der Malein- und Fumarsäure sowie deren Mischungen oder beliebige Gemische derartiger und anderer Monomerer.

Geeignete alkoholische Hydroxylgruppen aufweisende Monomere sind z.B. die Hydroxyalkylester α, β-ungesättigter Carbonsäuren, insbesondere von Acrylsäure oder Methacrylsäure mit 2 bis 12, vorzugsweise 2 bis 6 Kohlenstoffatomen im Hydroxyalkylrest, wie 2-Hydroxyethylacrylat, die isomeren, durch Anlagerung von 1 mol Propylenoxid an 1 mol Acrylsäure erhaltenen Hydroxypropylacrylate, 2-, 3-und 4-Hydroxybutylacrylat, die isomeren Hydroxyhexylacrylate und die diesen Acrylaten entsprechenden Methacrylate. Ebenfalls geeignet sind mit Ethylen-, Propylen- und/oder Butylenoxid modifizierte bzw. kettenverlängerte, hydroxyfunktionelle Monomere eines maximalen Molekulargewichts von 376 g/mol.

Bei der Hydroxylgruppen-haltigen Komponente B₂) handelt es sich um einen Ethergruppen-haltigen ein- oder mehrwertigen Alkohol des Molekulargewichtsbereichs 108 bis 2 000 g/mol, vorzugsweise 192 bis 1 100 g/mol oder um Gemische mehrerer solcher Verbindungen. Bevorzugt handelt es sich dabei um Polyetherpolyole mit 2 oder mehr Hydroxygruppen pro Molekül, wie sie z.B. durch Addition cyclischer Ether, wie Ethylenoxid, Propylenoxid, Styroloxid, Butylenoxid oder Tetrahydrofuran an Startermoleküle wie Wasser, Ethergruppen-freie, mehrwertige Alkohole, Aminoalkohole oder Amine in an sich bekannter Weise zugänglich sind. Besonders bevorzugt sind Polyether, die zu mindestens 50 %, insbesondere zu mindestens 90 %, bezogen auf die Summe ihrer Wiederholungseinheiten, aus Wiederholungseinheiten der Struktur -CH(CH₃)CH₂O- aufgebaut sind. Als Startermoleküle hierfür geeignete, mehrwertige Alkohole seien beispielhaft genannt: Ethylenglykol, Propandiol-1,2 und -1,3, Butandiol-1,2, -1,3, -1,4 und -2,3, Pentandiol-1,5, 3-Methylpentandiol-1,5, Hexandiol-1,6, Octandiol-1,8, 2-Methylpropandiol-1,3, 2,2-Dimethylpropandiol-1,3, 2-Ethyl-2-butylpropandiol-1,3, 2,2,4-Trimethylpentandiol-1,3, 2-Ethylhexandiol-1,3, höhermolekulare α,ω-Alkandiole mit 9 bis 18 Kohlenstoffatomen, Cyclohexandimethanol, Cyclohexandiole, Glycerin, Trimethylolpropan, Butandiol-1,2,4, Hexantriol-1,2,6, Bis-(trimethylolpropan, Pentaerythrit, Mannit oder Methylglykosid.

Geeignete Aminoalkohole sind z.B. 2-Aminoethanol, 2-(Methyamino)-ethanol, Diethanolamin, 3-Amino-1propanol, 1-Amino-2-propanol, Diisopropanolamin, 2-Amino-2-hydroxymethyl-1,3-propandiol oder deren Gemische.

Geeignete mehrwertige Amine sind insbesondere aliphatische oder cycloaliphatische Amine, wie z.B. Ethylendiamin, 1,2-Diaminopropan, 1,3-Diaminopropan, 1,4-Diaminobutan, 1,3-Diamino-2,2-dimethylpropan, 4,4-Diaminodicyclohexylmethan, Isophorondiamin, Hexamethylendiamin, 1,12-Dodecandiamin oder deren Mischungen.

Neben den beschriebenen 2- und höherfunktionellen Polyetherpolyolen können auch Monohydroxypolyether allein oder im Gemisch mit höherfunktionellen Polyetherpolyolen eingesetzt werden. Monohydroxypolyether können analog den oben genannten Polyetherpolyolen durch Addition der oben genannten cyclischen Ether an Monoalkohole, insbesondere lineare oder verzweigte aliphatische oder cycloaliphatische Monohydroxyalkane, wie z.B. Methanol, Ethanol, Propanol, Butanol, Hexanol, 2-Ethylhexanol, Cyclohexanol oder Stearylalkohol oder sekundäre aliphatische oder cycloaliphatische Monoamine, wie z.B. Dimethylamin, Diethylamin, Diisopropylamin, Dibutylamin, N-Methylstearylamin, Piperidin oder Morpholin erhalten werden. Bevorzugt werden aber höherfunktionelle Polyetherpolyole, insbesondere solche mit 2 oder 3 Hydroxygruppen pro Polyethermolekül, eingesetzt.

Bei der Alkoholkomponente B₃) handelt es sich um eine oder mehrere Hydroxyverbindungen des Molgewichts 32 bis 1 000 g/mol. Bevorzugt eingesetzt werden dabei niedermolekulare Hydroxyverbindungen des Molekulargewichts 32 bis 350 g/mol, wie z.B. Methanol, Ethanol, Propanol, Butanol, Hexanol, 2-Ethylhexanol, Cyclohexanol, Stearylalkohol, Ethylenglykol, Diethylenglykol, Triethylenglykol, Propandiol-1,2 und -1,3, Dipropylenglykol, Tripropylenglykol, Butandiol-1,2, -1,3, -1,4 und -2,3, Pentandiol-1,5, 3-Methylpentandiol-1,5, Hexandiol-1,6, 2-Ethylhexandiol-1,3, 2-Methylpropandiol-1,3, 2,2-Dimethylpropandiol-1,3, 2-Butyl-2-ethylpropandiol-1,3, 2,2,4-Trimethylpentandiol-1,3, Octandiol-1,8, höhermolekulare α,ω-Alkandiole mit 9 bis 18 Kohlenstoffatomen, Cyclohexandimethanol, Cyclohexandiol, Glycerin, Trimethylolpropan, Butantriol-1,2,4, Hexantriol-1,2,6, Bis(trimethylolpropan), Pentaerythrit, Mannit oder Methylglykosid.

Gegebenenfalls können als Komponente B₃) auch die aus der Polyurethanchemie an sich bekannten Hydroxypolyester, Hydroxypolyesteramide, Hydroxypolycarbonate oder Hydroxypolyacetale bis zu einem Molekulargewicht von 1 000 g/mol eingesetzt werden.

Bei der Herstellung der Polyhydroxykomponente B) des erfindungsgemäßen Bindemittelgemisches beträgt das Gewichtsverhältnis der Komponente B₁) zur Summe der Komponenten B₂) und gegebenenfalls B₃) 20 : 80 bis 80 : 20, bevorzugt 35 : 65 bis 65 : 35. In einer besonders bevorzugten Ausführung der Erfindung ist die Polyhydroxykomponente B) frei von Alkoholen der Gruppe B₃).

Die Herstellung der Polyhydroxykomponente B) des erfindungsgemäßen Bindemittelgemisches erfolgt durch eine an sich bekannte, beispielsweise in der EP-A 580 054 beschriebene radikalische Polymerisation im Zulaufverfahren. Im allgemeinen werden mindestens 50 Gew.-% der Komponente B₂), bevorzugt 100-Gew.-%, im Polymerisationsgefäß vorgelegt und auf Reaktionstemperatur, die bei 80 bis 220°C, vorzugsweise bei 120 bis 200°C liegt, aufgeheizt. Anschließend werden die Monomermischung B₁), gegebenenfalls Anteile der Komponenten B₂) und B₃) und ein Polymerisationsinitiator C zudosiert. Nach beendeter Zugabe wird bis zur Beendigung der Umsetzung bei einer Temperatur, die 0 bis 80°C, bevorzugt 0 bis 50°C, unter der ursprünglichen Reaktionstemperatur liegt, nachgerührt. Gegebenenfalls kann Komponente B₃) auch erst nach beendeter Polymerisation zugegeben werden. Als Polymerisationsinitiatoren seien beispielhaft Dibenzoylperoxid, Di-tert-butylperoxid, Dilaurylperoxid, Dicumylperoxid, Didecanoylperoxid, tert-Butylperoxy-2-ethylhexanoat, tert-Butylperpivalat oder Butylperoxybenzoat sowie Azoverbindungen, z.B. 2,2'-Azobis(2,4-dimethylvaleronitril), 2,2-Azobis-(isobutyronitril), 2,2'-Azobis(2,3-dimethylbutyronitril), 1,1'-Azobis-(1-cyclohexannitril) genannt.

Gegebenenfalls ist es erforderlich, durch nachträgliche Zugabe von geringen Initiatormengen, eine Nachaktivierung vorzunehmen, um den vollständigen Monomerenumsatz zu erreichen. Falls in Ausnahmefällen ein zu geringer Umsatz nach Abbruch der Reaktion festgestellt wird und noch größere Mengen an Ausgangsverbindungen a) und b) im Reaktionsgemisch enthalten sind, können diese entweder durch Destillation entfernt oder durch erneute Nachaktivierung mit Initiator bzw. Katalysator unter gleichzeitigem Erhitzen auf Reaktionstemperatur zur Umsetzung gebracht werden.

Bei der Herstellung der Polyhydroxykomponente B) des erfindungsgemäßen Bindemittelgemisches können gegebenenfalls molekulargewichtsregelnde Substanzen, wie n-Dodecylmercapten, tert-Dodecylmercaptan oder dergleichen, die in EP-A 471 258-A beschriebenen α-Olefine mit niedriger Polymerisationstendenz sowie die in EP-A 597 747-B1 beschriebenen, derivatisierten Diene in Mengen von bis zu 20 Gew.-%, bevorzugt bis 10 Gew.-%, bezogen auf das Gesamtgewicht der Komponente B), eingesetzt werden.

Gegebenenfalls können der Polyhydroxykomponente B) die an sich in der Lacktechnologie bekannten Antioxidantien und/oder Lichtschutzmittel als Stabilisatoren zugesetzt werden, um Licht- und Wtterstabilität der Polyetherpolyacrylate weiter zu verbessern; bevorzugt werden die erfindungsgemäßen Bindemittelgemische aber frei von Stabilisatoren eingesetzt. Geeignete Antioxidantien sind z.B. sterisch gehinderte Phenole wie 4-Methyl-2,6-di-tert-butylphenol (BHT) oder andere, unter der Produktklassenbezeichnung "Irganox" von Ciba Geigy angebotene substituierte Phenole, Thioether (z.B. "Irganox PS", Ciba Geigy) oder Phosphite (z.B. "Irgaphos", Ciba Geigy). Geeignete Lichtschutzmittel sind z.B. "HALS"-Amine (Hindered Amine Light Stabilizers) wie z.B. Tinuvin 622D® oder Tinuvin 765® (Ciba Geigy) sowie substituierte Benzotriazole wie z.B. Tinuvin 234®, Tinuvin 327® oder Tinuvin 571® (Ciba Geigy).

Zur Herstellung der erfindungsgemäßen Beschichtungsmittel werden die Komponenten A) und B) miteinander in solchen Mengenverhältnissen vermischt, die einem NCO : OH-Äquivalentverhältnis von 0,5 : 1 bis 2,0 : 1, vorzugsweise 0,8 : 1 bis 1,5 : 1 entsprechen. Während oder nach dieser Durchmischung der Einzelkomponenten können gegebenenfalls die üblichen Hilfs- und Zusatzstoffe der Beschichtungsmitteltechnologie zugemischt werden. Hierzu gehören beispielsweise Verlaufsmittel, viskositätskontrollierende Zusätze, Pigmente, Füllstoffe, Mattierungsmittel, UV-Stabilisatoren und Antioxidantien sowie Katalysatoren für die Vernetzungsreaktion.

Die aus den erfindungsgemäßen Bindemittelgemischen und gegebenenfalls Hilfsund Zusatzstoffen der beispielhaft genannten Art bestehenden, erfindungsgemäß zu verwendenden Beschichtungsmittel eignen sich insbesondere als lösemittelfreie Zweikomponenten-Polyurethan-Beschichtungen zum Schützen metallischer Substrate gegen mechanische Beschädigung und Korrosion sowie zum Schützen mineralischer Untergründe, wie z.B. Beton gegen Umwelteinflüsse und mechanische Beschädigung.

Die folgenden Beispiele sollen die Erfindung näher erläutern, ohne sie jedoch einzuschränken. Alle Angaben in % beziehen sich auf das Gewicht. Viskositätsmessungen wurden in einem Rotationsviskosimeter nach DIN 53019 bei einem Schergefälle von 9,24 s⁻¹ oder 28,9⁻¹ durchgeführt.

### Beispiele

### Verwendete Polyisocyanate:

A) Biuretgruppen aufweisendes Lackpolyisocyanat auf Basis von 1,6-Diisocyanatohexan mit einem NCO-Gehalt von 23,0 % und einer Viskosität bei 23°C von 2 750 mPa·s (Desmodur N 3200 der Bayer AG, Leverkusen).
B) Isocyanat-Prepolymer auf Basis einer mit Trimethylolpropan gestarteten Propylenoxid-basierenden Polyethersdes OH-Gehalts 1,7 % von 4,4'-Diphenylmethandiisocyanat mit einem NCO-Gehalt von 23,0 % und einer Viskosität bei 25°C von 240 mPa·s.

### Verwendete Polyetherpolyole:

A) verzweigter Polyether auf Basis Propylenoxid mit einem Zahlenmittel des Molekulargewichts von 437 g/mol, einer Viskosität bei 23°C von 600 mPa·s und einem OH-Gehalt von 11,7 % (Desmophen 550 U der Bayer AG),
B) linearer, mit Propylenglykol gestarteter Polyether auf Basis Propylenoxid mit einem Zahlenmittel des Molekulargewichts von 218 g/mol, einer Viskosität bei 23°C von 55 mPa·s und einem OH-Gehalt von 15.6 %,
C) linearer Polyether auf Basis Propylenoxid mit einem Zahlenmittel des Molekulargewichts von 416 g/mol, einer Viskosität bei 23°C von 70 mPa·s und einem OH-Gehalt von 8,2 % (Desmophen 4 000 Z der Bayer AG),
D) linearer Polyether auf Basis Propylenoxid mit einem Zahlenmittel des Molekulargewichts von 1 002 g/mol, einer Viskosität bei 23°C von 140 mPa·s und einem OH-Gehalt von 3,4 % (Desmophen 1 600 U der Bayer AG),
E) Gemisch eines verzweigten Polyethers auf Basis Propylenoxid (Starter: Trimethylolpropan) mit einem Zahlenmittel des Molekulargewichts von 3 000 g/mol, einer Viskosität bei 23°C von 500 mPa·s und eines OH-Gehalts von 1,7 % mit einem verzweigten Polyether auf Basis Propylenoxid (Starter: Ethylendiamin) mit einem Zahlenmittel des Molekulargewichts von 477 g/mol, einer Viskosität bei 23°C von 5 400 mPa·s und einem OH-Gehalt von 14,2 % im Gewichtsverhältnis von 36 : 64.

### Beispiele 1 bis 8

Allgemeine Arbeitsvorschrift zur Herstellung der nachstehend tabellarisch zusammengefaßten Polyetherpolyacrylate:

Die Komponenten aus Teil I werden in einem Reaktionsgefäß unter Rühren auf Polymerisationstemperatur erhitzt. Innerhalb von 3 Stunden wird Teil II und parallel dazu innerhalb von 3,5 Stunden Teil III kontinuierlich zudosiert. Nach weiteren 2 Stunden bei gleicher Temperatur wird das Produkt auf Raumtemperatur abgekühlt und gegebenenfalls Teil IV zugemischt.

Die Zusammensetzung der Teile I bis IV und die Polymerisationstemperatur sowie der OH-Gehalt und die Viskosität der erhaltenen Produkte sind in Tabelle 1 angegeben.

**Tabelle 1**

| Herstellung der Polyetherpolyacrylate | | | | | | | | | | |
|---|---|---|---|---|---|---|---|---|---|---|
| Beispiel | | | 1 | 2 | 3 | 4 | 5 | 6 | 7 | 8 |
| Teil I | Polyether A | [g] | | | 25,0 | 30,0 | 60,0 | 40,0 | 50,0 | 49,9 |
| | Polyether B | [g] | | 20,0 | 25,0 | 15,0 | | | | |
| | Polyether C | [g] | | 30,0 | | 15,0 | | | | |
| | Polyether D | [g] | 60,0 | | | | | | | |
| Teil II | 2-Ethylhexylacrylat | [g] | | 33,5 | 32,0 | 26,5 | 26,5 | 19,4 | 15,9 | 16,2 |
| | Butylacrylat | [g] | 12,8 | | | | | | | |
| | Styrol | [g] | 9,6 | 9,0 | 10,0 | 7,5 | 7,5 | 7,4 | 6,1 | 6,2 |
| | Hydroxyethylmethacrylat | [g] | 13,8 | 4,0 | 4,4 | 3,0 | 3,0 | 8,2 | 8,2 | 8,3 |
| Teil III | Di-tert-butylperoxid | [g] | 3,8 | 3,5 | 3,6 | 3,0 | 3,0 | 2,4 | 2,4 | 2,5 |
| Teil IV | 2,2,4-Trimethylpentandiol | [g] | | | | | | 22,6 | | |
| | Dipropylenglykol | [g] | | | | | | | | 16,9 |
| | 2-Ethylhexandiol | [g] | | | | | | | 18,4 | |
| Polymerisationstemperatur | | [°C] | 165 | 175 | 180 | 180 | 180 | 180 | 180 | 180 |
| OH-Gehalt | | [%] | 3,9 | 6,0 | 7,2 | 7,3 | 7,5 | 10,5 | 11,1 | 11,1 |
| Viskosität (23°C) | | mPa·s | 2900 | 440 | 1020 | 560 | 1260 | 1490 | 1110 | 1200 |

### Beispiele 9 bis 15

Allgemeine Arbeitsvorschrift zur Herstellung der Bindemittelgemische und deren Verwendung:

Das Lackpolyisocyanat und das Polyetherpolyacrylat werden mit Katalysator und Additiven versetzt und homogen vermischt. Das Bindemittelgemisch wird dann auf das Prüfsubstrat appliziert. Die Zusammensetzung, die Shore-D-Endhärte sowie die Prüfbedingungen und Ergebnisse der Bewitterungstests und der Haftungstests sind in den Tabellen 2 und 3 angegeben.

**Tabelle 2**

| Herstellung und Verwendung der Bindemittelgemische im Baubereich zur Beton-beschichtung | | | | |
|---|---|---|---|---|
| Beispiel | | 9 | 10 | 11 (nicht erfindungsgemäß) |
| Polyetherpolyacrylat aus Bsp. 7 | [g] | 100 | | |
| Polyetherpolyacrylat aus Bsp. 8 | [g] | | 100 | |
| Polyetherpolyol A | [g] | | | 100 |
| Trockenmittel^{a)} | [g] | 10 | 10 | 10 |
| Entschäumer^{b)} | [g] | 0,4 | 0,4 | 0,4 |
| Dibutylzinndilaurat | [g] | 0,1 | 0,1 | 0,2 |
| Polyisocyanat A | [g] | 122 | 122 | 122 |
| NCO : OH-Äquivalentverhältnis | | 1:1 | 1:1 | 1:1 |
| Verarbeitungszeit^{c)} | [min] | 40 | 40 | 35 |
| Shore D-Härte nach DIN 53505 | | 73 | 74 | 75 |
| Blasenbildung | | 0 | 0 | 0 |
| Bewitterung | | 3 | 4 | 5 |

| | | | | |
|---|---|---|---|---|
| ^{a}): Baylith L-Paste der Bayer AG | | | | |
| ^{b}): Byk A 530 der Byk Chemie GmbH | | | | |
| ^{c}): Zeit bis zur Verdopplung der Viskosität | | | | |

Bedingungen: Filmdicke 2 mm, Filmeigenschaften nach 3 d, 50°C, Blasenbildung und Bewitterung wurden nach einer Bewertungsskala von 0 bis 5 (0 = bester Wert; 5 = schlechtester Wert) beurteilt.

**Tabelle 3**

| Herstellung und Verwendung der Bindemittel im Korrosionsschutz beim Beschichten von Stahl | | | | | |
|---|---|---|---|---|---|
| Beispiel | | 12 | 13 | 14 | 15 (nicht erfindungsgemäß |
| Polyetherpolyacrylat aus Bsp.7 | [g] | 100 | | | |
| Polyetherpolyacrylat aus Bsp.5 | [g] | | 100 | | |
| Polyetherpolyacrylat aus Bsp.4 | [g] | | | 100 | |
| Polyetherpolyol E | [g] | | | | 100 |
| Butandiol-1,4 | [g] | 33 | 16 | 16 | 16 |
| Trockenmittel^{a)} | [g] | 20 | 24 | 24 | 24 |
| Entschäumer ^{b)} | [g] | 1,5 | 1,6 | 1,6 | 1,6 |
| Diazabicyclo[2,2,2]-octan 10%ig | [g] | 1,9 | 1,5 | 1,5 | 1,5 |
| Polyisocyanat B | [g] | 256 | 180 | 180 | 180 |
| NCO:OH-Äquivalentverhältnis | | 1:1 | 1:1 | 1:1 | 1:1 |
| Verarbeitungszeit^{c)} | [Min] | 3 | 3 | 8 | 1 |
| Shore D - Härte nach DIN 53 505 | | 70 | 74 | 66 | 74 |
| Blasenbildung | | 1-2 | 1-2 | 1 | 2 |
| Haftung auf Stahl | | 1 | 1 | 1 | 3 |
| Naßhaftung (25°C) | | | | | |
| nach 1 d | | 0-1 | 0-1 | 1 | 3 |
| nach 7 d | | 1 | 1-2 | 3 | 5 |
| CD-Test^{d)}: Haftung | [mm] | | 0 | | 5 |
| Unterwanderung | | | 0 | | 17 |

| | | | | | |
|---|---|---|---|---|---|
| Bedingungen: Naßfilmdicke 400 µm; Filmeigenschaften nach 1d; Filmlagerung vor Haftungsprüfung 7d bei RT; Blasenbildung und Haftung wurden nach einer Bewertungsskala von 0 bis 5 (0 = bester Wert; 5 = schlechtester Wert) beurteilt. ^{a}): Baylith L-Paste der Bayer AG | | | | | |
| ^{b}): Byk 085 der Byk Chemie GmbH | | | | | |
| ^{c}): Zeit bis zur Verdopplung der Viskosität | | | | | |
| ^{d}): Cathodic disbonding-Test: Substrat Stahl (Sa 2 1/2), Schichtdicke 350 bis 470 µm, Lagerung 7 d bei RT, Beanspruchung 20d | | | | | |

## Patentansprüche

1. Bindemittelgemisch zur Herstellung lösemittelfreier, harter Beschichtungen, bestehend aus:
A) einer Polyisocyanatkomponente bestehend aus mindestens einem organischen Polyisocyanat
und
B) einer lösemittelfreien Polyhydroxykomponente, bestehend aus
B₁) einer hydroxyfunktionellen Polyacrylatkomponente und
B₂) einer, eine oder mehrere Hydroxygruppen-tragenden Ethergruppen-haltigen Verbindung oder einem Gemisch mehrerer solcher Verbindungen sowie gegebenenfalls
B₃) weiteren hydroxyfunktionellen Verbindungen
in einem NCO : OH-Äquivalentverhältnis von 0,5 : 1 bis 2,0 : 1 entsprechenden Mengen, **dadurch gekennzeichnet, daß** die Polyacrylatkomponente B₁) aus einem Gemisch olefinisch ungesättigter Monomere, in welchem mindestens eines hydroxyfunktionell sein muß, in Gegenwart der Komponente B₂) und gegebenenfalls der Komponente B₃) hergestellt wird, und daß die Polyhydroxykomponente B) einen Hydroxylgruppengehalt von 3,0 bis 18 Gew.-% und eine Viskosität bei 23°C von 200 bis 10 000 mPa·s aufweist.

2. Bindemittelgemisch gemäß Anspruch 1, **dadurch gekennzeichnet, daß** die lösemittelfreie Polyhydroxykomponente B) einen Hydroxylgruppengehalt von 5,0 bis 15,0 Gew.-% und eine Viskosität bei 23°C von 300 bis 5 000 mPa·s besitzt.

3. Bindemittelgemisch gemäß Anspruch 1, **dadurch gekennzeichnet, daß** die Polyhydroxykomponente B) durch radikalische Polymerisation von
B₁) 20 bis 80 Gew.-Teilen eines Gemisches olefinisch ungesättigter Monomere, welches zu 5 bis 50 Gew.-% aus alkoholischen Hydroxylgruppen aufweisenden Monomeren besteht, in Gegenwart von
B₂) 20 bis 80 Gew.-Teilen eines, eine oder mehrere Hydroxylgruppen aufweisenden Polyethers, der ein mittleres Molekulargewicht von 106 bis 4 000 g/mol und einen Hydroxylgruppengehalt von 1,0 bis 30,0 Gew.-% aufweist oder eines Gemisches mehrerer solcher Polyether, gegebenenfalls unter Zusatz von
B₃) 0 bis 25 Gew.-Teilen weiteren hydroxyfunktionellen Verbindungen, die ein Molekulargewicht von nicht mehr als 1 000 g/mol besitzen; mit Hilfe von
C) Radikalbildnern als Polymerisationsinitiatoren
hergestellt wird.

4. Bindemittelgemisch gemäß Anspruch 1, **dadurch gekennzeichnet, daß** die Komponente B₁) zur Summe der Komponenten B₂) und gegebenenfalls B₃) im Gewichtsverhältnis 35 : 65 bis 65 : 35 vorliegt.

5. Bindemittelgemisch gemäß Anspruch 1, **dadurch gekennzeichnet, daß** die Komponente B₂) einen, eine oder mehrere Hydroxylgruppen-tragenden Polyether, der ein mittleres Molekulargewicht von 200 bis 1 100 g/mol, einen Hydroxylgruppengehalt von 3,0 bis 16,0 Gew.-% und eine Viskosität bei 23°C von 30 bis 1 000 mPa·s aufweist oder ein Gemisch mehrerer solcher Polyether darstellt, und daß die gegebenenfalls enthaltenen weiteren hydroxyfunktionellen Verbindungen B₃) ein Molekulargewicht von höchstens 350 g/mol und einen Hydroxylgruppenghalt von mindestens 6 % besitzen.

6. Bindemittelgemisch gemäß Anspruch 1, **dadurch gekennzeichnet, daß** die Komponente B₂) einen zwei- oder mehr Hydroxygruppen-tragenden Polyether, der ein mittleres Molekulargewicht von 200 bis 500 g/mol, einen Hydroxylgruppengehalt von 8,0 bis 16,0 % und eine Viskosität von 23°C von 50 bis 700 mPa·s aufweist und der zu mindestens 90 %, bezogen auf die Gesamtmenge seiner Wiederholungseinheiten, aus Wiederholungseinheiten der Formel (-CH(CH₃)CH₂O-) aufgebaut ist oder ein Gemisch solcher Polyether enthält, wobei die Polyhydroxykomponente B) frei von niedermolekularen hydroxyfunktionellen Verbindungen B₃) ist.

7. Verwendung der Bindemittelgemische gemäß den Ansprüchen 1 bis 6 in lösemittelfreien Zweikomponenten-Polyurethan-Systemen zum Beschichten metallischer Substrate oder mineralischer Untergründe.

## Claims

1. Binder mixture for producing solvent-free, hard coatings, consisting of:
A) a polyisocyanate component consisting of at least one organic polyisocyanate,
and
B) a solvent-free polyhydroxy component consisting of
B₁) a hydroxyfunctional polyacrylate component, and
B₂) a compound containing ether groups and bearing one or more hydroxy groups, or a mixture of a plurality of such compounds, as well as optionally
B₃) further hydroxyfunctional compounds
in amounts corresponding to an NCO : OH equivalent ratio of 0.5 : 1 to 2.0 : 1, **characterised in that** the polyacrylate component B₁) is prepared from a mixture of olefinically unsaturated monomers in which at least one monomer must be hydroxy-functional, in the presence of component B₂) and optionally component B₃), and that the polyhydroxy component B) has a hydroxyl group content of 3.0 to 18 wt.% and a viscosity at 23°C of 200 to 10000 mPa.s.

2. Binder mixture according to claim 1, **characterised in that** the solvent-free polyhydroxy component B) has a hydroxyl group content of 5.0 to 15.0 wt.% and a viscosity at 23°C of 300 to 5000 mPa.s.

3. Binder mixture according to claim 1, **characterised in that** the polyhydroxy component B) is prepared by free radical polymerisation of
B₁) 20 to 80 parts by weight of a mixture of olefinically unsaturated monomers which consist in an amount of 5 to 50 wt.% of monomers having alcoholic hydroxyl groups, in the presence of
B₂) 20 to 80 parts by weight of a polyether containing one or more hydroxyl groups and that has a mean molecular weight of 106 to 4000 g/moles and a hydroxyl group content of 1.0 to 30.0 wt.%, or a mixture of a plurality of such polyethers, optionally with the addition of
B₃) 0 to 25 parts by weight of further hydroxyfunctional compounds that have a molecular weight of not more than 1000 g/moles, with the aid of
C) radical formers as polymerisation initiators.

4. Binder mixture according to claim 1, **characterised in that** the component B₁) is present in a weight ratio of 35 : 65 to 65 : 35 with respect to the sum of the components B₂) and optionally B₃).

5. Binder mixture according to claim 1, **characterised in that** the component B₂) is a polyether bearing one or more hydroxyl groups and that has a mean molecular weight of 200 to 1100 g/moles, a hydroxyl group content of 3.0 to 16.0 wt.%, and a viscosity at 23°C of 30 to 1000 mPa.s, or a mixture of a plurality of such polyethers, and that the optionally contained further hydroxyfunctional compounds B₃) have a molecular weight of at most 350 g/moles and a hydroxyl group content of at least 6%.

6. Binder mixture according to claim 1, **characterised in that** the component B₂) is a polyether bearing two or more hydroxy groups and that has a mean molecular weight of 200 to 500 g/moles, a hydroxyl group content of 8.0 to 16.0% and a viscosity at 23°C of 50 to 700 mPa.s, and that is synthesised in an amount of at least 90%, referred to the total amount of its repeating units, from repeating units of the formula (-CH(CH₃)CH₂O-), or contains a mixture of such polyethers, the polyhydroxy component B) being free from low molecular weight hydroxyfunctional compounds B₃).

7. Use of the binder mixtures according to claim 1 to 6 in solvent-free two-component polyurethane systems for coating metallic or mineral substrates.

## Revendications

1. Mélange de liant, pour la préparation de revêtements durs, exempts de solvant, consistant en :
A) un composant polyisocyanate consistant en au moins un polyisocyanate organique, et
B) un composant polyhydroxylé exempt de solvant, consistant en :
B1) un composant polyacrylate à fonction hydroxyle, et
B2) un composé à radicaux éther, portant un ou plusieurs radicaux hydroxyle ou un mélange de plusieurs de tels composés, ainsi que le cas échéant
B3) d'autres composés à fonction hydroxyle,
en une quantité correspondant à un rapport d'équivalents NCO:OH allant de 0,5:1 à 2,0:1, **caractérisé en ce que** le composant polyacrylate B1) est préparé à partir d'un mélange de monomères oléfiniquement insaturés, dans lequel au moins un doit être à fonction hydroxyle, en présence du composant B2) et le cas échéant, du composant B3), et **en ce que** le composant polyhydroxylé B) présente une teneur en radicaux hydroxyle de 3,0 à 18% en poids et une viscosité à 23°C de 200 à 10 000 mPa.s.

2. Mélange de liant suivant la revendication 1, **caractérisé en ce que** le composant polyhydroxylé B) exempt de solvant possède une teneur en radicaux hydroxyle de 5,0 à 15,0% en poids et une viscosité à 23°C de 300 à 5000 mPa.s.

3. Mélange de liant suivant la revendication 1, **caractérisé en ce que** le composant polyhydroxylé B) est préparé par polymérisation radicalaire de :
B1) 20 à 80 parties en poids d'un mélange de monomères oléfiniquement insaturés, qui consiste en 5 à 50% en poids de monomères présentant des radicaux hydroxyle alcooliques, en présence de
B2) 20 à 80 parties en poids d'un polyéther présentant un ou plusieurs radicaux hydroxyle, qui présente un poids moléculaire moyen allant de 106 à 4000 g/mole et une teneur en radicaux hydroxyle allant de 1,0 à 30,0% en poids ou un mélange de tels polyéthers, le cas échéant avec addition de
B3) 0 à 25 parties en poids d'autres composés à fonction hydroxyle, qui possèdent un poids moléculaire non supérieur à 1000 g/mole, à l'aide de
C) des agents formant radicaux comme initiateurs de polymérisation.

4. Mélange de liant suivant la revendication 1, **caractérisé en ce que** le composant B1) est présent, par rapport à la somme du composant B2) et le cas échéant, B3), en un rapport pondéral allant de 35:65 à 65:35.

5. Mélange de liant suivant la revendication 1, **caractérisé en ce que** le composant B2) est un polyéther portant un ou plusieurs radicaux hydroxyle, qui présente un poids moléculaire moyen allant de 200 à 1100 g/mole, une teneur en radicaux hydroxyle allant de 3,0 à 16,0% en poids et une viscosité à 23°C allant de 30 à 1000 mPa.s ou un mélange de plusieurs de tels polyéthers, et **en ce que** les composés à fonction hydroxyle B3) le cas échéant présents, possèdent un poids moléculaire d'au maximum 350 g/mole et une teneur en radicaux hydroxyle d'au moins 6%.

6. Mélange de liant suivant la revendication 1, **caractérisé en ce que** le composant B2) contient un polyéther portant deux ou plusieurs radicaux hydroxyle, qui présente un poids moléculaire moyen allant de 200 à 500 g/mole, une teneur en radicaux hydroxyle allant de 8,0 à 16,0% en poids et une viscosité à 23°C allant de 50 à 700 mPa.s et qui est constitué d'au moins 90%, sur base de la quantité totale de ses unités récurrentes, d'unités récurrentes de la formule (-CH(CH₃)CH₂O-) ou un mélange de tels polyéthers, où le composant polyhydroxylé B) est exempt de composés à fonction hydroxyle B3) de faible poids moléculaire.

7. Utilisation du mélange de liant suivant les revendications 1 à 6 dans des systèmes de polyuréthanne à deux composant exempts de solvant, pour le revêtement de substrats métalliques ou de supports minéraux.
